# EUROPÄISCHE PATENTSCHRIFT

(11) **EP 0 715 196 B1**
(45) Veröffentlichungstag und Bekanntmachung des Hinweises auf die Patenterteilung: **25.09.2002**
(21) Anmeldenummer: 95118634.5
(22) Anmeldetag: 27.11.1995
(51) Int. Cl.: G02B 6/44

(54) **Kassettenmodul für Lichtwellenleiter**
Splice tray module for optical fibers
Module de cassettes pour fibres optiques

(30) Priorität: 01.12.1994 DE 4442823
(43) Veröffentlichungstag der Anmeldung: 05.06.1996
(73) Patentinhaber: CCS Technology, Inc., Wilmington, DE 19803 (US)
(72) Erfinder: Finzel, Lothar, Dipl.-Ing., D-85716 Unterschleissheim (DE); Schmallegger, Hermann, D-81379 München (DE); Kreutz, Dieter, D-82031 Grünwald (DE); Schröder, Günter, D-82140 Neuesting (DE); Licker, Anton-Günther, D-81737 München (DE)
(74) Vertreter: Sturm, Christoph, Dipl.-Ing.

(56) Entgegenhaltungen:
- EP-A- 0 215 668
- WO-A-94/12904
- WO-A-94/23324
- WO-A-95/07486
- FR-A- 2 694 642

## Beschreibung

Die Erfindung betrifft ein Kassettenmodul für Lichtwellenleiter gemäß dem Oberbegriff des Anspruchs 1.

In der deutschen Offenlegungsschrift DE 4106171 AI ist ein Kassettenblock beschrieben, der aus buchförmig aufklappbaren Kassetten besteht. Öffnungen an den Längsseiten der Kassetten ermöglichen eine vereinfachte Verdrahtung zwischen Koppler und Spleißkassetten. Die Kassettenblöcke können sowohl in schrankförmige Gestelle als auch in Muffen eingesetzt werden.

Insbesondere für den Einsatz in Muffen ist jedoch ein anderer Kassettentyp geeignet, der aus der deutschen Auslegeschrift DE 44 05 666 A1 bekannt ist. Dieser Kassettentyp ist dem kreisförmigen Querschnitt der Muffe angepaßt und wird in einer Universal-Anschlußeinheit für Lichtwellenleiter verwendet, wobei die Kassette entsprechend ihrem Verwendungszweck zur Aufnahme von Spleißen oder von Kopplern ausgebildet sein kann. Die Verdrahtung zwischen den Kassetten erfolgt über Verdrahtungselemente, die als Rückwand auf einem Montagebügel befestigt sind. Die Verdrahtung zwischen den einzelnen Kassetten kann bereits vorgefertigt werden, so daß nur noch die Anschlußkabeln angeschlossen werden müssen. Durch die vorgefertigte Verdrahtung wird jedoch die Flexibilität eingeschränkt und eine nachträgliche Änderung erschwert .

Ein Kassettenmodul mit den Merkmalen des Oberbegriffs Patentanspruchs 1 ist bekannt aus EP-A-0 215 668. Bezüglich weiteren Standes der Technik wird auf FR-A-2 694 642, WO-A-94 23324, WO-A-94 12094 und WO-A-95 07486 verwiesen.

Aufgabe der Erfindung ist es, eine Möglichkeit zum flexiblen Aufbau von Anschlußeinheiten anzugeben.

Diese Aufgabe wird durch ein Kassettenmodul gemäß Anspruch 1 gelöst.

Weiterbildungen der Erfindung sind in den Unteransprüchen angegeben.

Besonders vorteilhaft ist die Verwendung von Kassettenmodulen, bei denen bereits die Verdrahtung zwischen den einzelnen Kassetten vorgefertigt ist. Hierdurch wird die Montage am Einsatzort wesentlich erleichtert, da nur noch Spleißverbindungen zu den Anschlußkabeln - oder bei Änderungen zu anderen Kassettenmodulen - hergestellt werden müssen. Zur Erleichterung der Montage sind entweder Schläuche über die Führungsrückwand herausgeführt, in die Lichtleiterfasern eingeführt werden, oder es besteht die Möglichkeit, die Hohladern des Anschlußkabels über eine Variante der Führungsrückwand direkt zu den Spleißkassetten zu führen.

Ein Kassettenmodul kann entweder nur Spleißkassetten oder Spleiß- und Kopplerkassetten enthalten. Auch können je nach Bedarf unterschiedliche Spleißkassetten verwendet werden. Die Kassettenmodule weisen alle gleiche Höhe auf, so daß sie problemlos ausgetauscht werden können.

Vorteilhaft ist, daß die Kassetten einzeln mit Hilfe einer Selektionseinrichtung bis zu einem Anschlag ausgeschwenkt werden können und so der Innenraum der Kassette vollständig für Servicearbeiten zugänglich ist. Die Anschlußadern bzw. Anschlußfasern verlaufen in einem Führungskanal der herausgeschwenkten Kassette und sind hierdurch vor zufälligen oder unachtsamen Beschädigungen geschützt.

Je nach Einsatzfall können die Anschlußadern senkrecht oder waagerecht aus dem Kassettenblock herausgeführt werden. Die gleiche Bauhöhe der Kassettenmodule gestattet ein problemloses Austauschen.

Vorteilhaft ist eine Rastvorrichtung, die die Kassetten im eingeschwenkten Zustand sichert und hierdurch Beschädigungen beim Transport und der Montage verhindert.

Ein Ausführungsbeispiel eines Kassettenmoduls wird anhand von Figuren näher erläutert.

Es zeigen:
- Fig. 1: ein Kassettenmodul,
- Fig. 2 und Fig. 3: Spleißkassetten,
- Fig. 4: eine Kopplerkassette,
- Fig. 5: eine Führungsrückwand für ein Spleiß- und Kopplerkassetten aufweisendes Kassettenmodul,
- Fig. 6: eine Querschnittsdarstellung eines Anschlußschlauches und
- Fig. 7: eine Führungsrückwand für ein nur Kopplerkassetten aufweisendes Kassettenmodul.

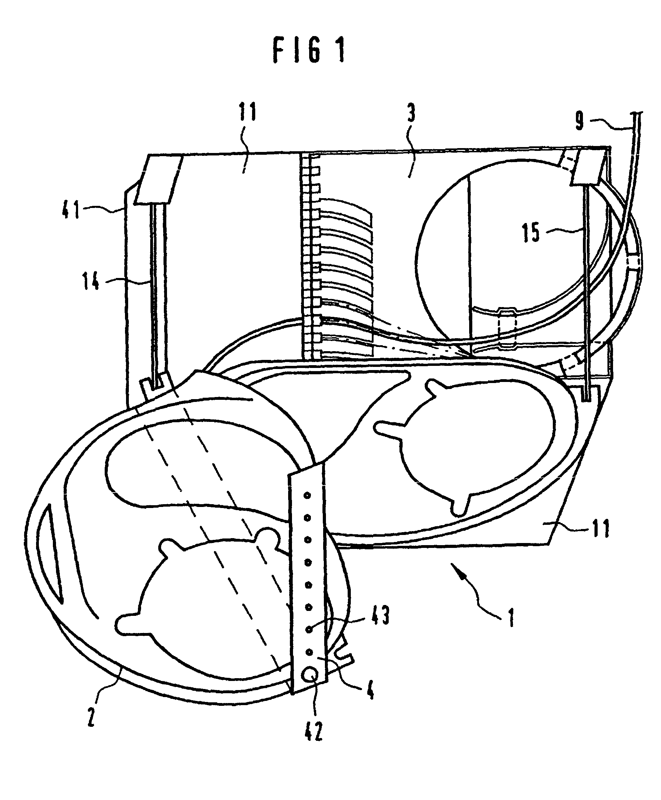

Figur 1 zeigt ein Kassettenmodul in perspektivischer Darstellung. Das Kassettenmodul besteht aus einem Rahmen 11, in den übereinanderliegend mehrere Kassetten 2 eingefügt sind, die um eine Achse 12 schwenkbar gelagert sind.

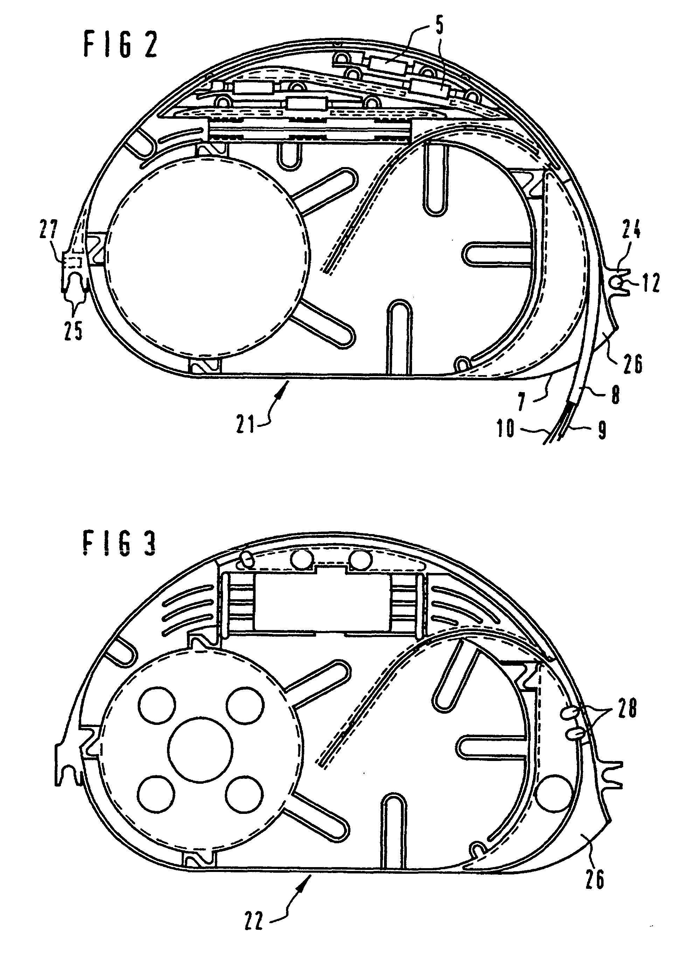

Die oberen Kassetten sind entfernt, um die Führungsrückwand 3 sichtbar werden zu lassen. Mit Hilfe eines Führungsbügels 4 ist eine Kassette bis zu einem Anschlag 41 ausgeschwenkt. Die Auswahl der Kassette erfolgt durch eine einfache bügelförmige Selektionseinrichtung 4, die einen Stift 42 und Bohrungen in einem Schenkel aufweist, durch die der Stift in eine Bohrung 27 (Fig. 2) in der Kassettenzarge geführt werden kann. Die Verbindung zwischen einer Kopplerkassette und einer Spleißkassette desselben Kassettenmoduls erfolgt durch Lichtleiterfasern über die Führungsrückwand. Über diese Führungsrückwand werden auch Hohladerschläuche 9 zu den Spleißkassetten geführt.

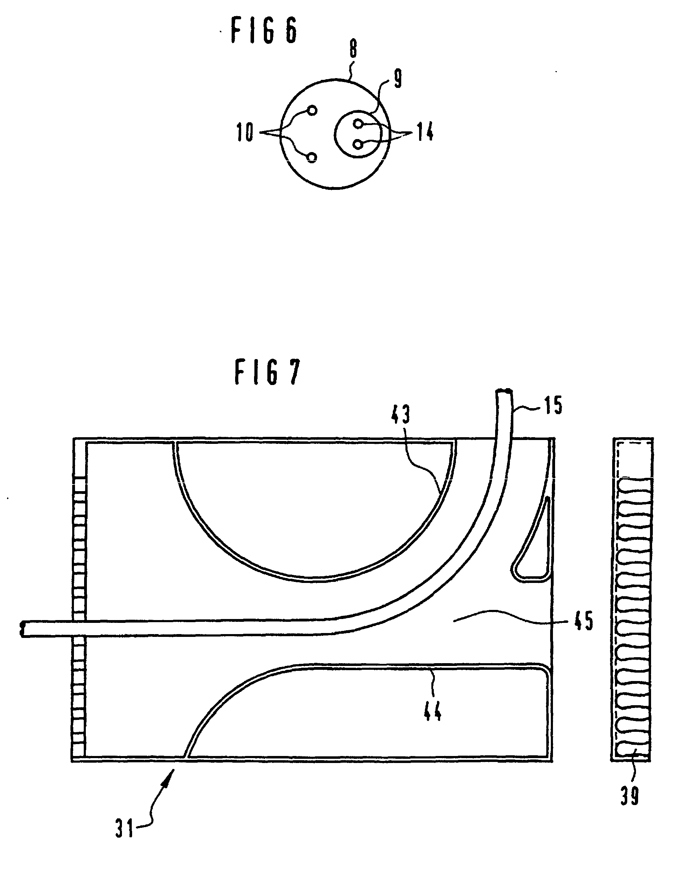

In Figur 2 ist ein erstes Ausführungsbeispiel einer Spleißkassette 21 dargestellt. In der Nähe der Kassettenbasis weist die Kassette eine Schwenkhalterung 24 auf, die auf die im Rahmen 11 befestigte Achse 12 aufgeschoben wird. Die Kassette ist dann um diese Achse schwenkbar. Die Anschlußadern, Lichtleiterfasern 10 oder Hohladerschläuche 9 (oder Hohladern 15; Fig. 7), werden durch eine Zuführungsöffnung 7 und einen Führungskanal 26 zu den Spleißen 5 geführt und ebenso können durch die achtförmige Faserführung innerhalb der Kassette die angespleißten Fasern durch denselben Führungskanal herausgeführt werden.
Zum Schutz der Lichtwellenleiter und Hohladern ist ein Schlauch 8 vorgesehen.
Auf der der Schwenkhalterung 24 gegenüber liegenden Seite der Kassette ist eine Rastklemme 25 angeordnet, die an einer zweiten Achse 13 (Figur 1) im eingeschwenkten Zustand einrastet.
Die Bohrung 27 dient zum Einführen des Stiftes 42 der Selektionseinrichtung.

In den Kassettenboden können in Nähe der Spleiße Öffnungen vorgesehen sein, um Messungen direkt an einer Lichtleiterfaser vorzunehmen.

In Figur 3 ist eine Variante der Spleißkassette 22 dargestellt, die zur Aufnahme von acht Spleißen 5 in zwei Lagen dient. Im Führungskanal 26 ist eine Zugentlastung 28 vorgesehen.

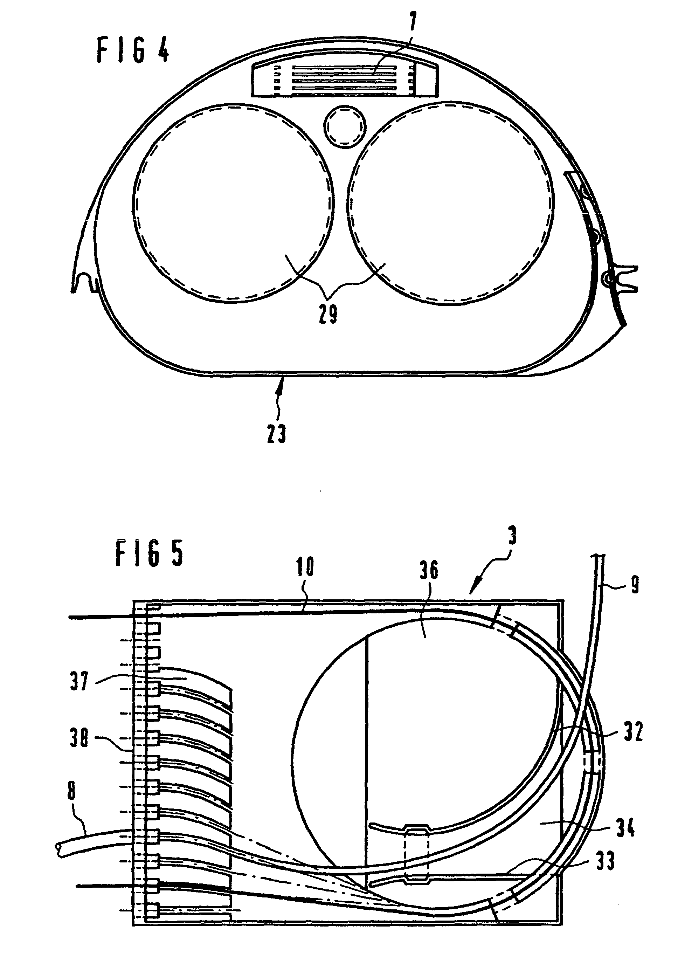

Figur 4 zeigt eine Kopplerkassette 23, bei der Koppler 7 im oberen der Kassettenbasis gegenüberliegenden Teil angeordnet sind. Die Reservelänge kann achtförmig um zwei Wickelkörper 29 aufbewahrt werden.

Figur 5 zeigt eine Führungsrückwand 3 für ein Kassettenmodul, das Koppler- und Spleißkassetten enthält. Unmittelbar auf der Rückwand ist ein kreisförmiger Kern 36 vorgesehen, der im äußeren Bereich die innere Begrenzung einer Führungsrille 31 bildet. Um diesen Kern werden die Lichtleiterfasern 10 geführt, die die Koppler einer Kassette mit den Spleißen einer anderen Kassette verbinden. Diese können durch eine Abdeckplatte zusätzlich vor Beschädigungen geschützt werden. In der oberen Ebene verlaufen Hohladerschläuche 9 (oder Hohladern), die gemeinsam mit den Lichtleiterfasern 10 in Anschlußschläuche 8 eingeführt sind. Führungsstege 32 und 33 sorgen dafür, daß die minimal zulässigen Biegeradien nicht unterschritten werden. An der anderen (linken) Seite der Führungsrückwand - nahe den Führungskanälen der Kassetten - sind Führungsstege 37 zur Aufnahme der Hohladernschläuche 9 und der Lichtleiterfasern 10 vorgesehen, die in den durch Bohrungen 38 geführten Anschlußschläuchen 8 enden. Die gesamte Führungsrückwand kann durch eine weitere Abdeckplatte verschlossen werden.

In Figur 6 ist ein Anschlußschlauch 8 in Querschnitt dargestellt. Man erkennt den darin geführten Hohladerschlauch 9 mit zwei Lichtwellenleitern 14 und ebenso die Lichtwellenleiter 10.

In Figur 7 ist eine Variante der Führungsrückwand 31 für ein Kassettenmodul dargestellt, in dem nur Spleißkassetten angeordnet sind. Eine Verdrahtung zwischen den Kassetten mittels Lichtwellenleiterfasern entfällt bei diesem Modul. Die Führungsrückwand ist mit Führungsstegen 43 und 44 versehen, die für die Einhaltung des minimalen Biegeradius sorgen. Der so gebildete Führungskanal 45 gestattet sowohl eine Umlenkung von Hohladern in die Senkrechte als auch deren waagerechten Eintritt. Diese Führungsrückwand ist für Hohladern geeignet, die von den Anschlußkabeln kommen und direkt durch Langlöcher der Führungsrückwand bis in die Spleißkassetten geführt werden.

## Patentansprüche

1. Kassettenmodul (1) für Lichtwellenleiter, mit einem Rahmen (11) zur Aufnahme mehrerer halbkreisförmig ausgebildeter Kassetten (2), wobei jede Kassette (2) einzeln um eine Drehachse (12) schwenkbar ist,wobei die Drehachse senkrecht zur Grundfläche der Kassette orientiert ist, wobei eine Zuführungsöffnung (7) für Lichtwellenleiter (10, 14) an der Basis jeder Kassette (2) nahe der Drehachse (12) vorgesehen ist, und wobei eine senkrecht zur Schwenkebene angeordnete Führungsrückwand (3, 31) vorgesehen ist, die Führungsstege (32, 33, 37, 43, 44) zur Führung von Lichtwellenleitern (10, 14) oder Hohladern (9, 15) aufweist,
**dadurch gekennzeichnet, dass**
ein Führungsbügel (4) vorgesehen ist, der um die Drehachse (12) schwenkbar ist und hierbei jeweils eine Kassette (2) mit ausschwenkt.

2. Kassettenmodul nach Anspruch 1,
**dadurch gekennzeichnet,**
**daß** die Führungsrückwand (3) derart ausgebildet ist, daß sie einen kreisförmigen Kern (36) zur Umlenkung von Lichtwellenleitern (10) und darüber hinausragende Führungsstege (32, 33) zum Umlenken von Hohladern (15) oder Hohladerschläuchen (9) aufweist.

3. Kassettenmodul nach Anspruch 1,
**dadurch gekennzeichnet,**
**daß** die Führungsrückwand (31) Führungsstege (43, 44) zur Umlenkung von Hohladern (15) oder Hohladerschläuchen (14) aufweist und in der Nähe der Zuführungsöffnung (7) Langlöcher (39) zur Fixierung der Hohladern bzw. der Hohladernschläuche aufweist.

4. Kassettenmodul nach Anspruch 1 oder 2,
**dadurch gekennzeichnet,**
**daß** durch die Führungsstege (32, 33, 43, 44) ein Führungskanal (34, 44) gebildet wird, der sowohl eine senkrechte als auch eine waagerechte Führung von Anschlußadern (9, 15) ermöglicht.

5. Kassettenmodul nach einem der vorhergehenden Ansprüche,
**dadurch gekennzeichnet,**
**daß** unterschiedliche Ausführungsformen der Kassetten (2, 21, 22, 23) zu Kassettenblöcken gleicher Höhe zusammengefaßt sind.

6. Kassettenmodul nach einem der vorhergehenden Ansprüche,
**dadurch gekennzeichnet,**
**daß** die Verkabelung zwischen Kassetten (2) eines Kassettenmoduls (1) bereits fabrikmäßig vorgesehen ist.

7. Kassettenmodul nach einem der vorhergehenden Ansprüche,
**dadurch gekennzeichnet,**
**daß** durch die Führungsrückwand (3) laufende bis in die Kassetten (2, 21, 22) führende Hohladerschläuche (9) vorgesehen sind.

8. Kassettenmodul nach Anspruch 7,
**dadurch gekennzeichnet,**
**daß** von der Führungsrückwand (3) bis in die Kassetten (2, 21, 22) führende Anschlußschläuche (8) vorgesehen sind, die mindestens einen Hohladernschlauch (9) enthalten und zusätzlich Lichtleiterfasern (10) aufnehmen.

9. Kassettenmodul nach einem der vorhergehenden Ansprüche,
**dadurch gekennzeichnet,**
**daß** die Kassette (2, 21, 22, 23) eine mit einem Langloch versehene Rastklemme (24) aufweist; die über eine die Drehachse bildende Achse (12) geschoben werden kann.

10. Kassettenmodul nach einem der vorhergehenden Ansprüche,
**dadurch gekennzeichnet,**
**daß** bei jeder Kassette (2, 21, 22, 23) eine der Drehachse (12) gegenüberliegende Rastklemme (25) vorgesehen ist, die die Kassette (2, 21, 22, 23) im eingeschwenkten Zustand fixiert.

11. Kassette nach einem der vorhergehenden Ansprüche,
**dadurch gekennzeichnet,**
**daß** ein Anschlag (41) vorgesehen ist, der das Ausschwenken einer Kassette (2, 21, 22, 23) begrenzt.

## Claims

1. Splice tray module (1) for optical fibres, with a frame (11) for receiving a plurality of semicircularly formed splice trays (2), each splice tray (2) being individually pivotable about a pivot axis (12), the pivot axis being oriented perpendicular to the base area of the splice tray, with a feed opening (7) for optical fibres (10, 14) being provided on the base of each splice tray (2) near the pivot axis (12), and with a guiding rear wall (3, 31) being provided, said wall being arranged perpendicular to the pivoting plane and having guiding webs (32, 33, 37, 43, 44) for guiding optical fibres (10, 14) or loose buffers (9, 15), **characterized in that** a guiding arm (4) is provided, which is pivotable about the pivot axis (12) and thereby respectively pivots a splice tray (2) out with it.

2. Splice tray module according to Claim 1, **characterized in that** the guiding rear wall (3) is formed in such a way that it has a circular core (36) for deflecting optical fibres (10) and guiding webs (32, 33) protruding beyond the said core for deflecting loose buffers (15) or loose buffer tubes (9).

3. Splice tray module according to Claim 1, **characterized in that** the guiding rear wall (31) has guiding webs (43, 44) for deflecting loose buffers (15) or loose buffer tubes (14) and has in the vicinity of the feed opening (7) elongated holes (39) for fixing the loose buffers or the loose buffer tubes.

4. Splice tray module according to Claim 1 or 2, **characterized in that** the guiding webs (32, 33, 43, 44) have the effect of forming a guiding channel (34, 44), which permits both vertical and horizontal guidance of connecting conductors (9, 15).

5. Splice tray module according to one of the preceding claims, **characterized in that** different embodiments of the splice trays (2, 21, 22, 23) are combined to form splice tray blocks of the same height.

6. Splice tray module according to one of the preceding claims, **characterized in that** the cabling between splice trays (2) of a splice tray module (1) is already provided at the factory.

7. Splice tray module according to one of the preceding claims, **characterized in that** loose buffer tubes (9) leading through the guiding rear wall (3) into the splice trays (2, 21, 22) are provided.

8. Splice tray module according to Claim 7, **characterized in that** connecting tubes (8) which contain at least one loose buffer tube (9) and additionally receive optical fibres (10) are provided.

9. Splice tray module according to one of the preceding claims, **characterized in that** the splice tray (2, 21, 22, 23) has a snap-in clip (24) which is provided with an elongated hole and can be pushed over a spindle (12) forming the pivot axis.

10. Splice tray module according to one of the preceding claims, **characterized in that** each splice tray (2, 21, 22, 23) is provided with a snap-in clip (25) which lies opposite the pivot axis (12) and fixes the splice tray (2, 21, 22, 23) in the pivoted-in state.

11. Splice tray according to one of the preceding claims, **characterized in that** a stop which limits the pivoting out of a splice tray (2, 21, 22, 23) is provided.

## Revendications

1. Module de cassettes (1) pour guides d'ondes lumineux comprenant un cadre (11) destiné à recevoir plusieurs cassettes (2) de forme semi-circulaire, chaque cassette (2) pouvant pivoter individuellement autour d'un axe de rotation (12), l'axe de rotation étant orienté perpendiculairement à la face de base de la cassette, une ouverture d'amenée (7) pour guides d'ondes lumineux (10, 14) étant pourvue à la base de chaque cassette (2) à proximité de l'axe de rotation (12), et une paroi arrière de guidage (3, 31) disposée perpendiculairement au plan de pivotement étant prévue, laquelle présente des nervures de guidage (32, 33, 37, 43, 44) pour guider des guides d'ondes lumineux (10, 14) ou des conducteurs creux (9, 15), **caractérisé en ce qu'**il est prévu une anse de guidage (4), qui peut pivoter autour de l'axe de rotation (12) et fait alors pivoter à chaque fois avec elle une cassette (2).

2. Module de cassettes selon la revendication 1, **caractérisé en ce que** la paroi arrière de guidage (3) est réalisée de telle sorte qu'elle présente un noyau circulaire (36) pour faire dévier les guides d'ondes lumineux (10) et des nervures de guidage (32, 33) saillant par-dessus pour faire dévier des conducteurs creux (15) ou des gaines de conducteurs creux (9).

3. Module de cassettes selon la revendication 1, **caractérisé en ce que** la paroi de guidage arrière (31) présente des nervures de guidage (43, 44) pour faire dévier des conducteurs creux (15) ou des gaines de conducteurs creux (14) et présente, à proximité de l'ouverture d'amenée (7), des trous oblongs (39) pour la fixation des conducteurs creux ou des gaines de conducteurs creux, respectivement.

4. Module de cassettes selon la revendication 1 ou 2, **caractérisé en ce qu'**un canal de guidage est formé par les nervures de guidage (32, 33, 43, 44), qui permet à la fois un guidage vertical et horizontal des conducteurs de raccordement (9, 15).

5. Module de cassettes selon l'une quelconque des revendications précédentes, **caractérisé en ce que** les différentes formes de réalisation des cassettes (2, 21, 22, 23) sont assemblées en des blocs de cassettes de même hauteur.

6. Module de cassettes selon l'une quelconque des revendications précédentes, **caractérisé en ce que** le câblage entre les cassettes (2) d'un module de cassettes (1) est déjà prévu en usine.

7. Module de cassettes selon l'une quelconque des revendications précédentes, **caractérisé en ce qu'**il est prévu des gaines de conducteurs creux (9) s'étendant à travers la paroi arrière de guidage (3) jusque dans les cassettes (2, 21, 22).

8. Module de cassettes selon la revendication 7, **caractérisé en ce que** des gaines de raccordement (8) sont prévues, conduisant de la paroi arrière de guidage (3) jusque dans les cassettes (2, 21, 22), lesquelles contiennent au moins une gaine de conducteur creux (9) et reçoivent en outre des fibres de guides lumineux (10).

9. Module de cassettes selon l'une quelconque des revendications précédentes, **caractérisé en ce que** la cassette (2, 21, 22, 23) présente une pince d'encliquetage (24) pourvue d'un trou oblong, qui peut être poussée par-dessus un axe (12) formant l'axe de rotation.

10. Module de cassettes selon l'une quelconque des revendications précédentes, **caractérisé en ce que** pour chaque cassette (2, 21, 22, 23), il est prévue une pince d'encliquetage (25) opposée à l'axe de rotation (12), qui fixe la cassette (2, 21, 22, 23) dans l'état pivoté vers l'intérieur.

11. Cassette selon l'une quelconque des revendications précédentes, **caractérisée en ce qu'**il est prévu une butée (41) qui limite le pivotement vers l'extérieur d'une cassette (2, 21, 22, 23).
